# EUROPÄISCHE PATENTSCHRIFT

(11) **EP 1 492 666 B1**
(45) Veröffentlichungstag und Bekanntmachung des Hinweises auf die Patenterteilung: **13.06.2007**
(21) Anmeldenummer: 03720379.1
(22) Anmeldetag: 28.03.2003
(51) Int. Cl.: B32B 9/00, C08J 5/06, C08J 5/08, C08K 9/08

(54) **VERBUNDWERKSTOFF, VERFAHREN ZU SEINER HERSTELLUNG UND SEINE VERWENDUNG**
COMPOSITE MATERIAL, METHOD FOR THE PRODUCTION AND USE THEREOF
MATERIAU COMPOSITE, PROCEDE DE FABRICATION ET UTILISATION DUDIT MATERIAU COMPOSITE

(30) Priorität: 03.04.2002 EP 02007534
(43) Veröffentlichungstag der Anmeldung: 05.01.2005
(73) Patentinhaber: Toho Tenax Europe GmbH, 42103 Wuppertal (DE)
(72) Erfinder: SCHWUNG, Klaus, Peter, 40883 Ratingen (DE); WOHLMANN, Bernd, 40599 Düsseldorf (DE)
(74) Vertreter: Muth, Arno
(86) Internationale Anmeldenummer: PCT/EP2003/003234
(87) Internationale Veröffentlichungsnummer: WO 2003/082565

(56) Entgegenhaltungen:
- WO-A-92/18431
- US-A- 4 489 129
- US-A- 5 641 572

## Beschreibung

Die Erfindung betrifft einen Verbundwerkstoff, ein Verfahren zu seiner Herstellung und seine Verwendung.

Verstärkungsfasern und deren Verwendung zur Herstellung von Verbundwerkstoffen mit einem Verbundharz sind bekannt. US 5 641 572 beschreibt Verstärkungsfasern aus Kohlenstoff-Kurzfasern, die als Präparation z.B. Polyphenylensulfid (PPS) enthalten. US 5 641 572 lehrt, dass der Präparations-Anteil bezogen auf das Gesamtgewicht der Kohlenstoff-Kurzfasern mindestens 0,01 Gew.% betragen muß, weil bei einem Präparations-Anteil von weniger als 0,01 Gew.% der Schutzeffekt unbefriedigend wird. Ferner lehrt US 5 641 572 die Carbonisierung der geschlichteten Kohlenstoff-Kurzfasern in einem Inertgas bei 400 bis 1500 °C. Danach enthalten die Kohlenstoff-Kurzfasern nur noch Carbonisierungsprodukte der Präparation. Schließlich offenbart US 5 641 572 die Herstellung eines Verstärkungsmaterials aus den carbonisierten Kohlenstoff-Kurzfasern mit einem thermoplastischen Harz. US 5 641 572 enthält keinerlei Hinweis, wie die scheinbare interlaminaren Scherfestigkeit (ILSF) und die Biegebruchfestigkeit von Verstärkungsfasern enthaltenden Verbundwerkstoffen verbessert werden könnten. Jedoch werden gerade an diese Eigenschaften immer höhere Anforderung gestellt.

Deshalb stellt sich die vorliegende Erfindung die Aufgabe, die scheinbare interlaminare Scherfestigkeit und die Biegebruchfestigkeit von Verstärkungsfasern enthaltenden Verbundwerkstoffen zu erhöhen.

Diese Aufgabe wird gelöst durch einen Verbundwerkstoff enthaltend ein Verstärkungsharz und Verstärkungsfasern, wobei die Verstärkungsfasern eine Polyphenylensulfid enthaltende Beschichtung aufweisen, dadurch gekennzeichnet, dass der Anteil des Polyphenylensulfids bezogen auf die unbeschichteten Verstärkungsfasern 0,001 bis < 0,01 Gew.% beträgt.

Verarbeitet man derartig beschichtete Verstärkungsfasern in an sich bekannter Weise zu einem Verbundwerkstoff, stellt man fest, dass die scheinbare interlaminare Scherfestigkeit und die Biegebruchfestigkeit im Vergleich zur Verstärkungsfasern mit nicht erfindungsgemäßer Beschichtung ansteigen. Dieses Ergebnis muß überraschen, weil es nicht vorhersehbar war, dass derartig geringe Mengen an PPS überhaupt irgend einen Einfluß auf die Verbundwerkstoff-Eigenschaften haben, geschweige denn, dass derart geringe Gewichtsanteile an PPS die scheinbare interlaminaren Scherfestigkeit und die Biegebruchfestigkeit verbessern. Noch mehr muß es überraschen, dass die scheinbare interlaminare Scherfestigkeit und die Biegebruchfestigkeit erfindungsgemäßer Verbundwerkstoffe im Bereich von 0,001 bis < 0,01 Gew.% PPS-Anteil an der Verstärkungsfaser ein Maximum aufweisen. Dieses Maximum liegt z.B. in erfindungsgemäßen Verbundwerkstoffen, die mit PPS-beschichtete Verstärkungsfasern aus Kohlenstoff enthalten und mit einem Polyetheretherketon zu einem Verbundwerkstoff verarbeitet wurden, bei einem PPS-Anteil an den Kohlenstoff-Fasern von etwa 0,006 Gew.%.

In einer bevorzugten Ausführungsform des erfindungsgemäßen Verbundwerkstoffs beträgt der Anteil des Polyphenylensulfids bezogen auf die unbeschichteten Verstärkungsfasern 0,002 bis 0,009 Gew.%.

In einer weiteren bevorzugten Ausführungsform des erfindungsgemäßen Verbundwerkstoffs besteht die Beschichtung aus Polyphenylensulfid und aus einem Thermoplast oder aus einem Duroplast, wobei als Thermoplast ein Polyetherimid, Polyetherketon, Polyetheretherketon, Polyethersulfon, Polyetherethersulfon oder Polysulfon und als Duroplast ein Epoxidharz bevorzugt wird.
Als Verstärkungsharze werden im erfindungsgemäßen Verbundwerkstoff bevorzugt Thermoplaste, wie z.B. Polyetherimid, Polyetherketon, Polyetheretherketon, Polyethersulfon, Polyetherethersulfon oder Polysulfon oder eine Mischung dieser Thermoplasten eingesetzt.

Als Verstärkungsfasern kommen für den erfindungsgemäßen Verbundwerkstoff im Prinzip alle Fasern natürlichen oder synthetischen Ursprungs in Betracht, welche die von Verstärkungsfasern geforderten Eigenschaften aufweisen, wobei, wenn die Verstärkungsfasern Kohlenstofffasern aus Pech-, Polyacrylnitril- oder Viskosevorprodukten oder Aramidfasern, Glasfasern, Keramikfasern, Borfasern, Synthesefasern oder Naturfasern oder Kombinationen dieser Fasern sind, die geforderten Eigenschaften besonders gut ausgebildet sind. Als Synthesefasern werden Polyesterfasern und als Naturfasern Flachs- und Sisalfasern besonders bevorzugt.

Unter den Kohlenstoff-Verstärkungsfasern wird insbesondere eine unter der Bezeichnung Tenax HTS^{®} von der Firma Tenax Fibers GmbH, Wuppertal erhältliche Kohlenstoff-Faser im erfindungsgemäßen Verbundwerkstoff bevorzugt. Dabei können die Fasern im erfindungsgemäßen Verbundwerkstoff als Kurzschnitt vorliegen oder als Filamentgarn, das aus mehreren tausend, vorzugsweise aus etwa 3 000 bis 24 000 Filamenten, bestehen kann. Außerdem können die Fasern im erfindungsgemäßen Verbundwerkstoff als textiles Flächengebilde, etwa als Gewebe, Vlies, Gewirke, Gestricke oder als uni- oder multidirektionales Gelege vorliegen.

Die der Erfindung zugrunde liegende Aufgabe wird desweiteren gelöst durch ein Verfahren zur Herstellung eines Verbundwerkstoffs umfassend die Schritte
a) Vorlegen von gegebenenfalls vorbehandelten Verstärkungsfasern,
b) Auftragen einer Polyphenylensulfid enthaltenden Schicht auf die Verstärkungsfasern von Schritt a), so dass die Schicht 0,001 bis < 0,01 Gew.% Polyphenylensulfid bezogen auf die Verstärkungsfasern enthält, wodurch beschichtete Verstärkungsfasern entstehen und
c) Verarbeiten der beschichteten Verstärkungsfasern von Schritt b) mit einem Verstärkungsharz zu einem Verbundwerkstoff.

In Schritt a) ist grundsätzlich jede Art des Vorlegens der Verstärkungsfasern geeignet, welche die gesamte Oberfläche der Fasern für die in Schritt b) aufzubringende Schicht zugänglich macht. So kann beispielsweise die frisch ersponnene und getrocknete Verstärkungsfaser einzeln oder als Fadenschar noch im Herstellungsprozess vor der Aufwicklung vorgelegt werden. Ebenso können die Verstärkungsfasern als Filamentgarn vorgelegt werden, das aus mehreren Tausend Filamenten, vorzugsweise aus etwa 3 000 bis 24 000 Filamenten besteht.

Als Verstärkungsfasern kommen für Schritt a) des erfindungsgemäßen Verfahrens im Prinzip alle Fasern natürlichen oder synthetischen Ursprungs in Betracht, welche die von Verstärkungsfasern geforderten Eigenschaften aufweisen, wobei, wenn die Verstärkungsfasern Kohlenstofffasern aus Pech-, Polyacrylnitril- oder Viskosevorprodukten oder Aramidfasern, Glasfasern, Keramikfasern, Borfasern, Synthesefasern oder Naturfasern oder Kombinationen dieser Fasern sind, die geforderten Eigenschaften besonders gut ausgebildet sind. Als Synthesefasern werden Polyesterfasern und als Naturfasern Flachs- und Sisalfasern besonders bevorzugt. Als Kohlenstoff-Verstärkungsfasern werden in Schritt a) des erfindungsgemäßen Verfahrens besonders bevorzugt die unter der Bezeichnung Tenax HTS^{®} von der Firma Tenax Fibers GmbH, Wuppertal erhältlichen Kohlenstoff-Faser vorgelegt.

Die in Schritt a) des erfindungsgemäßen Verfahrens vorgelegten Verstärkungsfasern werden vorbehandelt, wenn dies für eine hinreichende Benetzung der Verstärkungsfasern mit der in Schritt b) aufzubringenden Beschichtung und für die Haftung der Beschichtung an den Verstärkungsfasern erforderlich ist. Ebenso kann eine Vorbehandlung der Verstärkungsfasern die Haftung der beschichteten Fasern mit dem in Schritt c) eingesetzten Verstärkungsharz verbessern, wenn die Verstärkungsfasern in Schritt b) nicht auf ihrer gesamten Oberfläche mit der erfindungsgemäßen Beschichtung versehen wurden. Die zur Vorbehandlung eingesetzten Verfahren können gegebenenfalls Imprägnierverfahren sein, wobei die Verstärkungsfasern in hydophobe oder hydrophile flüssigen Medien getaucht und getrocknet werden. Ferner kommen Vorbehandlungsverfahren in Betracht, bei denen reaktive funktionelle Gruppen auf der Faseroberfläche eingeführt werden, wie etwa die elektrochemische Oxidation, welche die Oberfläche der Verstärkungsfasern z.B. mit Hydroxyl- und Carboxylgruppen versieht.

Zum Auftragen in Schritt b) des erfindungsgemäßen Verfahrens ist im Prinzip jedes Verfahren geeignet, das in der Lage ist, auf eine Verstärkungsfaser 0,001 bis < 0,01 Gew.% Polyphenylensulfid bezogen auf die Verstärkungsfasern aufzutragen.

Z.B. kann man die Verstärkungsfasern in Schritt b) durch eine PPS-Schmelze führen, wobei optional die Verstärkungsfasern zuvor durch eine Schmelze aus einem Thermoplasten wie etwa Polyetherimid geführt wurden. Ebenso kann man eine Schmelze aus PPS und einem Thermoplasten, wie z.B. Polyetherimid herstellen und die Verstärkungsfasern durch die Schmelze der beiden Polymeren hindurchführen.

Alternativ kann man PPS-Pulver in ein Plasma einführen. Dabei werden die PPS-Partikel in Richtung der Verstärkungsfaser beschleunigt und schmelzen auf. Auf der Verstärkungsfaser aufgetroffen, verfestigen sich die PPS-Partikel und bilden die gewünschte Schicht auf der Verstärkungsfaser. Dieser Plasmaspritzbeschichtung mit PPS kann eine Plasmaspritzbeschichtung mit einem Thermoplasten wie etwa Polyetherimid vorausgehen. Ebenso kann man bei der Plasmaspritzbeschichtung PPS und einen Thermoplasten, wie z.B. Polyetherimid gleichzeitig einsetzen.

Des weiteren kann der PPS-Auftrag integriert in den Herstellungsprozess der Verstärkungsfasern vor dem Aufwickeln durchgeführt werden, wobei die zum Auftrag von Avigagen bekannten Vorrichtungen Verwendung finden können. Dabei kann optional vor dem PPS-Auftrag der Auftrag eines Thermoplasten, wie z.B. Polyetherimid stattfinden. Ebenso kann man eine Präparation aus PPS und einem Thermoplasten, wie z.B. Polyetherimid herstellen und diese Präparation auf die Verstärkungsfasern auftragen. In einer bevorzugten Ausführungsform des erfindungsgemäßen Verfahrens wird das PPS im Form von Kristalliten auf die Verstärkungsfasern aufgetragen, indem man beispielsweise die Verstärkungsfasern von Schritt a) in Schritt b) durch ein Bad führt, das eine Aufschlämmung von PPS enthält, trocknet und aufwickelt. An die Temperatur des Bades werden keine besonderen Anforderungen gestellt, solange bei der gewählten Temperatur möglichst feinteilige PPS-Kristallite in der Aufschlämmung vorliegen. Dies ist in vielen Ausführungsformen des erfindungsgemäßen Verfahrens bereits bei Raumtemperatur in ausreichendem Maße der Fall, so dass diese Badtemperatur bevorzugt wird. Beim Trocknen ist es wichtig, dass man zwar die den beschichteten Verstärkungsfasern anhaftende Feuchtigkeit entfernt, jedoch eine Zersetzung der Beschichtung vermeidet. Dazu ist in vielen Fällen - abhängig von der Verweilzeit - ein Trocknertemperaturbereich von etwa 350 bis 400 °C geeignet. Optional kann man die Verstärkungsfasern zuerst durch ein Bad führen, das die Lösung eines Thermoplasten, z.B. von Polyetherimid enthält und die lösungsfeuchten fasern dann durch ein Bad führen, das eine Aufschlämmung von PPS enthält, wonach die Fasern wie bereits beschrieben aufgewickelt und getrocknet werden.

Besonders bevorzugt leitet man die Verstärkungsfasern, die z.B. als Filamentgarn mit 3 000 bis 24 000 Filamenten vorliegen können, durch ein Bad, dessen Inhalt aus einer Aufschlämmung aus PPS, einer Lösung eines Thermoplasten, z.B. einer Polyetherimid-Lösung, einem Lösungsmittel und gegebenenfalls aus einem Emulgator besteht, wonach die Fasern wie beschrieben getrocknet und aufgewickelt werden. Das Lösungsmittel wird so ausgewählt, dass es das PPS nicht löst, wohl aber den Thermoplasten. Dazu eignet sich, wenn der Thermoplast Polyetherimid ist, beispielsweise 1-Methyl-2-pyrrolidon (NMP). Als Emulgator eignet sich z.B. Decaethylenglykololeylether. Hierbei und in allen Ausführungsformen des erfindungsgemäßen Verfahrens, in denen eine PPS-Aufschlämmung in einem Bad eingesetzt wird, hält man den aufgeschlämmten Zustand durch ständige Bewegung des Badinhaltes, z.B. durch Umpumpen oder Rühren aufrecht. Beim Durchführen der Verstärkungsfasern durch das Bad beträgt die Fadenspannung vorzugsweise 0,3 bis 1,5 cN/tex, besonders bevorzugt 0,5 bis 1,0 cN/tex. Die Geschwindigkeit, mit der die Verstärkungsfasern durch die Aufschlämmung hindurchgeführt werden, beträgt vorzugsweise 60 bis 600 m/h, besonders bevorzugt 120 bis 480 m/h. Die Konzentration der PPS-Aufschlämmung im Bad beträgt vorzugsweise 0,2 bis 5 Gew.%, besonders bevorzugt 0,5 bis 1,5 Gew.% PPS jeweils bezogen auf den Gehalt an Polyetherimid, dessen Gewichtsanteil am Badinhalt beispielsweise im Bereich von 0,5 bis 1,0 Gew.% und besonders bevorzugt im Bereich von 0,5 bis 0,7 Gew.% liegt. Die vorstehend genannten Parameter werden so aufeinander abgestimmt, dass auf die Verstärkungsfasern beispielsweise eine Beschichtung von 0,5 bis 1,0 Gew.% und besonders bevorzugt von 0,5 bis 0,7 Gew.% aufzieht.

Eine Aufschlämmung mit besonders feinteiligen PPS-Kritalliten gelingt, wenn man den Thermoplasten und PPS im vorstehend genannten Gewichtsverhältnis in einen Extruder einbringt, im Extruder aufschmilzt und ein Granulat herstellt. Dieses Granulat wird in dem bereits erwähnten Lösungsmittel, das gegebenenfalls einen Emulgator enthält, eingebracht. Dabei löst sich der Thermoplast und das PPS bildet eine feinteilige Aufschlämmung. Den erfindungsgemäßen PPS-Anteil an der Verstärkungsfaser kann man z.B. dadurch einstellen, dass man bei vorgegebener Durchzugsgeschwindigkeit der Verstärkungsfasern durch das Bad die PPS-Konzentration im Bad so einstellt, dass die beschichteten Verstärkungsfasern 0,001 bis < 0,01 Gew.% PPS enthalten.

Der Gewichtsanteil der Beschichtung an den Verstärkungsfasern wird gemäß DIN EN ISO 10548, Methode B bestimmt. Falls die Beschichtung der Fasern zusätzlich zu PPS einen Thermoplasten enthält, wird der PPS-Gewichtsanteil an den beschichteten Verstärkungsfasern aus dem zur Beschichtung eingesetzten Gewichtsverhältnis von Thermoplast zu PPS berechnet.

In Schritt c) des erfindungsgemäßen Verfahrens werden die beschichteten Verstärkungsfasern mit einem Verstärkungsharz, vorzugsweise mit einem Thermoplasten oder mit einer Mischung aus Thermoplasten zu einem Verbundwerkstoff verarbeitet. Dabei sind als Thermoplast besonders ein Polyetherimid, Polyetherketon, Polyetheretherketon, Polyethersulfon, Polyetherethersulfon oder Polysulfon oder eine Mischung aus diesen Thermoplasten geeignet. Die Verfahren, mit denen die erfindungsgemäß beschichteten Verstärkungsfasern zu Verbundwerkstoffen verarbeitet werden, sind als solche bekannt. Dazu gehören beispielsweise
- das Mischen der erfindungsgemäß beschichteten Verstärkungsfasern mit Fasern oder mit einem Pulver oder mit einer Folie aus einem Verbundharz und anschließendem Heißpressen,
- das Imprägnieren der erfindungsgemäß beschichteten Verstärkungsfasern mit einer Schmelze oder einer Lösung des Verbundharzes und
- das Compoundieren der zu Kurzfasern geschnittenen erfindungsgemäß beschichteten Verstärkungsfasern.

Dabei können die erfindungsgemäß beschichteten Verstärkungsfasern in der Gestalt zu einem Verbundwerkstoff weiterverarbeitet werden, in der sie nach Schritt b) des erfindungsgemäßen Verfahrens vorliegen, z.B. als Filamentgarn.

Alternativ können die in Schritt b) des erfindungsgemäßen Verfahrens resultierenden beschichteten Verstärkungsfasern zuerst in die Gestalt eines textilen Flächengebildes gebracht und in dieser Gestalt zu einem Verbundwerkstoff verarbeitet werden. Beispielsweise können die in Schritt b) des erfindungsgemäßen Verfahrens resultierenden beschichteten Verstärkungsfasern zuerst zu einem Vlies verarbeitet oder zu Kurzfasern geschnitten werden. Ebenso können die erfindungsgemäß beschichteten Verstärkungsfasern zuerst in die Gestalt eines Gewebes, Geflechtes, Gestrickes oder Gewirkes oder in die Gestalt eines uni- oder multidirektionalen Geleges gebracht werden.

Bei der Herstellung des Verbundwerkstoffs in Schritt c) zeigen die erfindungsgemäß beschichteten Verstärkungsfasern ein ausgezeichnetes Imprägnierverhalten beim Heißverpressen mit Polyetheretherketon sowohl hinsichtlich der Penetration des Polyetheretherketons in das Filamentgarn als auch hinsichtlich der Benetzung der einzelnen beschichteten Filamente.
Die erfindungsgemäßen Verbundwerkstoffe haben einen Faservolumenanteil von 40 bis 70 Vol.-%, wobei der Faservolumenanteil in Laminaten aus unidirektionalen Prepregs vorzugsweise im Bereich von 55 bis 65 Vol.-%, in Laminaten aus Gewebeprepregs im Bereich von 45 bis 55 Vol.-% und in gewickelten bzw. pultrudierten Körpern im Bereich von 55 bis 70 Vol.-% liegt.

Gemäß DIN EN 2563 wird die scheinbare interlaminare Scherfestigkeit und gemäß DIN EN 2562 wird die Biegebruchfestigkeit (0° in Faserrichtung und 90° senkrecht zur Faserrichtung) der erfindungsgemäßen Verbundwerkstoffe gemessen.

Der erfindungsgemäße Verbundwerkstoff und der gemäß dem erfindungsgemäßen Verfahren hergestellte Verbundwerkstoff lassen sich vorteilhaft zur Herstellung von Komponenten für den Flugzeugbau, wie z.B. von Rumpf und Landeklappen, für den Automobilbau, wie z.B. von Motorteilen, Pumpen und Dichtungen, für den Maschinen-und Anlagenbau, wie z.B. von Dichtungen, Lagern und Behältern, und zur Herstellung von medizinischen Komponenten, wie z.B. von chirurgischen Instrumenten verwenden.

Die Erfindung wird anhand der folgenden Beispiele näher erläutert.

### Beispiel 1

98 Gewichtsteile Polyetherimid (Ultem^{®} von der Firma GE-Plastics) und 2 Gewichtsteile PPS (Fortron^{®} von der Firma Ticona) werden in einen Extruder eingebracht, im Extruder aufgeschmolzen und ein Granulat hergestellt. 39 g des Granulats werden in 590 g heißem 1-Methyl-2-pyrrolidon (NMP) eingerührt, bis das Polyetherimid gelöst ist. Das PPS löst sich nicht und bildet eine Aufschlämmung. Zur gerührten und bei 70° C abgekühlten Lösung des Polyetherimids bzw. Aufschlämmung des PPS wird eine Mischung zugetropft, die aus 200 g NMP, 60 g Wasser und aus 20 g des Emulgators Decaethylenglykololeylether besteht. Die dabei resultierende Mischung wird in 600 ml 50° C warmes Wasser eingerührt, so dass eine Emulsion entsteht, die durch Umpumpen in ständiger Bewegung gehalten wird. Die so erhaltene Lösung wird mit Wasser so weit verdünnt, bis man eine Lösung erhält, die aus 0,6 Gew.% Polyetherimid, 0,006 Gew.% PPS, 0,3 Gew.% Decaethylenglykololeylether, 12,2 Gew.% NMP und 86,894 Gew.% Wasser besteht.

Ein Filamentgarn mit einem Titer von 800 tex aus Kohlenstoff-Fasern, die unter der Bezeichnung Tenax HTS^{®} von der Firma Tenax Fibers GmbH erhältlich sind und durch elektrochemische Oxidation vorbehandelt wurden, wird unter einer Fadenspannung von 1,0 cN/tex mit einer Geschwindigkeit von 180 m/h durch die vorstehend beschriebene Emulsion geführt, bei 350 °C getrocknet und aufgewickelt. Der PPS-Anteil bezogen auf die Kohlenstoff-Fasern beträgt 0,006 Gew.% (s. Tabelle, Beispiel 1).

Das Filamentgarn wird mit Polyetheretherketon, das unter der Bezeichnung PEEK^{®} 151 G von der Firma Victrex^{®} erhältlich ist, zu einem Verbundwerkstoff verarbeitet. Dabei wird das Polyetheretherketon als Folie eingesetzt. Alternierende Lagen dieser Folie und der beschichteten Tenax HTS^{®} - Fasern werden gebildet. Danach werden die alternierenden Lagen bei einem Druck von ca. 9 bar und bei einer Temperatur knapp oberhalb von 400 °C verpresst. Nach dem Verpressen wird die Temperatur im Verbundwerkstoff innerhalb von 24 h auf Raumtemperatur abgesenkt.

Die scheinbare interlaminare Scherfestigkeit beträgt 143 MPa, die Biegebruchfestigkeit (0°) 3380,4 MPa und die Biegebruchfestigkeit (90°) 187 MPa (s. Tabelle, Beispiel 1).

### Beispiel 2

Beispiel 1 wird wiederholt mit dem Unterschied, dass die Emulsion aus 0,697 Gew.% Polyetherimid, 0,009 Gew.% PPS, 0,3 Gew.% Decaethylenglykololeylether, 12,2 Gew.% NMP und 86,894 Gew.% Wasser besteht. Der PPS-Anteil bezogen auf die Kohlenstoff-Fasern beträgt 0,009 Gew.% (s. Tabelle, Beispiel 2).

Die interlaminare Scherfestigkeit beträgt 125 MPa, die Biegebruchfestigkeit (0°) 2972,1 MPa und die Biegebruchfestigkeit (90°) 153 MPa (s. Tabelle, Beispiel 2).

### Vergleichsbeispiel

Beispiel 1 wird wiederholt mit dem Unterschied, dass das die Emulsion kein PPS enthält und aus aus 0,606 Gew.% Polyetherimid, 0,3 Gew.% Decaethylenglykololeylether, 12,2 Gew.% NMP und 86,894 Gew.% Wasser besteht (s. Tabelle, Vergleichsbeispiel V).

Die scheinbare interlaminare Scherfestigkeit beträgt 121 MPa, die Biegebruchfestigkeit (0°) 2473,3 MPa und die Biegebruchfestigkeit (90°) 152 (s. Tabelle, Vergleichsbeispiel V).

In der folgenden Tabelle sind die Gew.% PPS bezogen auf die Kohlenstoff-Faser (Gew.% PPS), die interlaminare Scherfestigkeit (ILSF), die Biegebruchfestigkeit (0°) als BBF (0°) und die Biegebruchfestigkeit (90°) als BBF (90°) zusammengefasst.

| Beispiel | Gew.% PPS | ILSF Mpa | BBF (0°) MPa | BBF (90°) MPa |
|---|---|---|---|---|
| 1 | 0,006 | 143 | 3380,4 | 187 |
| 2 | 0,009 | 125 | 2972,1 | 153 |
| V | 0,000 | 121 | 2473,3 | 152 |

Aus der Tabelle erkennt man, dass die ILSF und die BBF bei 0° und 90 ° bei einem PPS-Anteil an der Kohlenstoff-Faser von 0,006 Gew.% ein Maximum aufweist.

## Patentansprüche

1. Verbundwerkstoff enthaltend ein Verstärkungsharz und Verstärkungsfasern, wobei die Verstärkungsfasern eine Polyphenylensulfid enthaltende Beschichtung aufweisen, **dadurch gekennzeichnet, dass** der Anteil des Polyphenylensulfids bezogen auf die unbeschichteten Verstärkungsfasern 0,001 bis < 0,01 Gew.% beträgt.

2. Verbundwerkstoff nach Anspruch 1, **dadurch gekennzeichnet, dass** der Anteil des Polyphenylensulfids bezogen auf die unbeschichteten Verstärkungsfasern 0,002 bis 0,009 Gew.% beträgt.

3. Verbundwerkstoff nach Anspruch 1 oder 2, **dadurch gekennzeichnet, dass** die Beschichtung aus Polyphenylensulfid und aus einem Thermoplast oder Duroplast besteht.

4. Verbundwerkstoff nach einem oder mehreren der Ansprüche 1 bis 3, **dadurch gekennzeichnet, dass** das Verstärkungsharz ein Thermoplast oder eine Mischung aus Thermoplasten ist.

5. Verbundwerkstoff nach einem oder mehreren der Ansprüche 1 bis 4, **dadurch gekennzeichnet, dass** die Verstärkungsfasern Kohlenstofffasern aus Pech-, Polyacrylnitril- oder Viskosevorprodukten, Aramidfasern, Glasfasern, Keramikfasern, Borfasern, Synthesefasern oder Naturfasern oder Kombinationen dieser Fasern sind.

6. Verfahren zur Herstellung eines Verbundwerkstoffs umfassend die Schritte
a) Vorlegen von gegebenenfalls vorbehandelten Verstärkungsfasern,
b) Auftragen einer Polyphenylensulfid enthaltenden Schicht auf die Verstärkungsfasern von Schritt a), so dass die Schicht 0,001 bis < 0,01 Gew.% Polyphenylensulfid bezogen auf die Verstärkungsfasern enthält, wodurch beschichtete Verstärkungsfasern entstehen und
c) Verarbeiten der beschichteten Verstärkungsfasern von Schritt b) mit einem Verstärkungsharz zu einem Verbundwerkstoff.

7. Verfahren nach Anspruch 6, **dadurch gekennzeichnet, dass** die Verstärkungsfasern von Schritt a) Kohlenstofffasern aus Pech-, Polyacrylnitril- oder Viskosevorprodukten, Aramidfasern, Glasfasern, Keramikfasern, Borfasern, Synthesefasern oder Naturfasern oder Kombinationen dieser Fasern sind.

8. Verfahren nach Anspruch 6 oder 7, **dadurch gekennzeichnet, dass** die Kohlenstoff-Verstärkungsfasern von Schritt a) durch elektrochemische Oxidation vorbehandelt wurden.

9. Verfahren nach einem oder mehreren der Ansprüche 6 bis 8, **dadurch gekennzeichnet, dass** die Verstärkungsfasern von Schritt a) in Schritt b) durch ein Bad geführt werden, das eine Aufschlämmung von Polyphenylensulfid enthält, getrocknet und aufgewickelt werden.

10. Verfahren nach Anspruch 9, **dadurch gekennzeichnet, dass** das Bad zusätzlich eine Lösung eines Thermoplasten enthält.

11. Verfahren nach einem oder mehreren der Ansprüche 6 bis 10, **dadurch gekennzeichnet, dass** die beschichteten Verstärkungsfasern in Schritt c) in der Gestalt von Filamentgarnen, Kurzfasern, Geweben, Geflechten, Gestricken, Gewirken, Vliesen, uni- oder multidirektionalen Gelegen zu einem Verbundwerkstoff verarbeitet werden.

12. Verwendung des Verbundwerkstoffs nach einem oder mehreren der Ansprüche 1 bis 5 oder eines nach einem oder mehreren der Ansprüche 6 bis 11 hergestellten Verbundwerkstoffs zur Herstellung von Komponenten für den Flugzeugbau, den Automobilbau, den Maschinen- und Anlagenbau und zur Herstellung von medizinischen Komponenten.

13. Verstärkungsfasern, die eine Polyphenylensulfid enthaltende Beschichtung aufweisen, **dadurch gekennzeichnet, dass** der Anteil des Polyphenylensulfids bezogen auf die unbeschichteten Verstärkungsfasern 0,001 bis < 0,01 Gew.% beträgt.

14. Verstärkungsfasern nach Anspruch 13, **dadurch gekennzeichnet, dass** der Anteil des Polyphenylensulfids bezogen auf die unbeschichteten Verstärkungsfasern 0,002 bis 0,009 Gew.% beträgt.

15. Verstärkungsfasern nach Anspruch 13 oder 14, **dadurch gekennzeichnet, dass** die Beschichtung aus Polyphenylensulfid und aus einem Thermoplast oder Duroplast besteht.

16. Verstärkungsfasern nach einem oder mehreren der Ansprüche 13 bis 15, **dadurch gekennzeichnet, dass** die Verstärkungsfasern Kohlenstofffasern aus Pech-, Polyacrylnitril- oder Viskosevorprodukten, Aramidfasern, Glasfasern, Keramikfasern, Borfasern, Synthesefasern oder Naturfasern oder Kombinationen dieser Fasern sind.

## Claims

1. A composite material containing a reinforcing resin and reinforcing fibres, the reinforcing fibres having a coating containing polyphenylene sulfide, **characterised in that** the proportion of polyphenylene sulfide relative to the uncoated reinforcing fibres is 0.001 to < 0.01 per cent by weight.

2. Composite material according to Claim 1, **characterised in that** the proportion of polyphenylene sulfide relative to the uncoated reinforcing fibres is 0.002 to 0.009 wt.%.

3. Composite material according to Claim 1 or 2, **characterised in that** the coating consists of polyphenylene sulfide and a thermoplastic or duroplastic material.

4. Composite material according to one or more of Claims 1 to 3, **characterised in that** the reinforcing resin is a thermoplastic or a mixture of thermoplastics.

5. Composite material according to one or more of Claims 1 to 4, **characterised in that** the reinforcing fibres are carbon fibres of pitch, polyacrylonitrile or rayon precursors, or aramid, glass, ceramic, boron, synthetic or natural fibres, or combinations of these fibres.

6. A method for production of a composite material comprising the steps
a) provision of reinforcing fibres that have been pretreated if required,
b) application of a coating containing polyphenylene sulfide on the reinforcing fibres of step a), such that the coating contains 0.001 to < 0.01 wt.% of polyphenylene sulfide relative to the reinforcing fibres, resulting in the production of coated reinforcing fibres, and
c) processing of the coated reinforcing fibres of step b) into a composite material, using a reinforcing resin.

7. Method according to Claim 6, **characterised in that** the reinforcing fibres of step a) are carbon fibres of pitch, polyacrylonitrile or rayon precursors, or aramid, glass, ceramic, boron, synthetic or natural fibres, or combinations of these fibres.

8. Method according to Claim 6 or 7, **characterised in that** the carbon reinforcing fibres of step a) have been pretreated by electrochemical oxidation.

9. Method according to one or more of Claims 6 to 8, **characterised in that** the reinforcing fibres of step a) are conducted through a bath containing a suspension of polyphenylene sulfide, dried and wound up in step b).

10. Method according to Claim 9, **characterised in that** the bath also contains a solution of a thermoplastic.

11. Method according to one or more of Claims 6 to 10, **characterised in that** the coated reinforcing fibres in step c) are processed in the form of filament yarns, short fibres, woven, braided, knitted or crocheted fabrics, nonwovens, or uni- or multidirectional scrims into a composite material.

12. Use of the composite material according to one or more of Claims 1 to 5, or of composite material produced according to one or more of Claims 6 to 11, for production of components for aircraft construction, automobile construction, machine construction or plant construction, and for production of medical components.

13. Reinforcing fibres having a coating containing polyphenylene sulfide, **characterised in that** the proportion of polyphenylene sulfide relative to the uncoated reinforcing fibres is 0.001 to < 0.01 wt.%.

14. Reinforcing fibres according to Claim 13, **characterised in that** the proportion of polyphenylene sulfide relative to the uncoated reinforcing fibres is 0.002 to 0.009 wt.%.

15. Reinforcing fibres according to Claims 13 or 14, **characterised in that** the coating consists of polyphenylene sulfide and a thermoplastic or duroplastic.

16. Reinforcing fibres according to one or more of Claims 13 to 15, **characterised in that** the reinforcing fibres are carbon fibres of pitch, polyacrylonitrile or rayon precursors, or aramid, glass, ceramic, boron, synthetic or natural fibres, or combinations of these fibres.

## Revendications

1. Matériau composite comprenant une résine de renfort et des fibres de renfort, dans lequel les fibres de renfort portent une couche d'enduit contenant un poly(sulfure de phénylène), **caractérisé en ce que** la proportion pondérale de poly(sulfure de phénylène), rapportée aux fibres de renfort sans enduit, vaut de 0,001 à moins de 0,01 %.

2. Matériau composite conforme à la revendication 1, **caractérisé en ce que** la proportion pondérale de poly(sulfure de phénylène), rapportée aux fibres de renfort sans enduit, vaut de 0,002 à 0,009 %.

3. Matériau composite conforme à la revendication 1 ou 2, **caractérisé en ce que** la couche d'enduit est constituée de poly(sulfure de phénylène) et d'une matière thermoplastique ou d'une matière thermodurcissable.

4. Matériau composite conforme à l'une ou plusieurs des revendications 1 à 3, **caractérisé en ce que** la résine de renfort est une matière thermoplastique ou un mélange de matières thermoplastiques.

5. Matériau composite conforme à l'une ou plusieurs des revendications 1 à 4, **caractérisé en ce que** les fibres de renfort sont des fibres de carbone issues de précurseurs en brai, polyacrylonitrile ou viscose, des fibres d'aramide, des fibres de verre, des fibres de céramique, des fibres de bore, des fibres synthétiques ou des fibres naturelles, ou encore une combinaison de telles fibres.

6. Procédé de fabrication d'un matériau composite, comprenant les étapes suivantes :
a) prendre des fibres de renfort, qui ont éventuellement subi un traitement préalable,
b) déposer sur les fibres de renfort de l'étape (a) une couche contenant un poly(sulfure de phénylène), de manière à ce qu'il y ait, dans cette couche, de 0,001 à moins de 0,01 % en poids de poly(sulfure de phénylène), par rapport aux fibres de renfort, grâce à quoi l'on obtient des fibres de renfort enduites,
c) et traiter ces fibres de renfort enduites issues de l'étape (b) avec une résine de renfort, pour en faire un matériau composite.

7. Procédé conforme à la revendication 6, **caractérisé en ce que** les fibres de renfort de l'étape (a) sont des fibres de carbone issues de précurseurs en brai, polyacrylonitrile ou viscose, des fibres d'aramide, des fibres de verre, des fibres de céramique, des fibres de bore, des fibres synthétiques ou des fibres naturelles, ou encore une combinaison de telles fibres.

8. Procédé conforme à la revendication 6 ou 7, **caractérisé en ce que** les fibres de renfort en carbone de l'étape (a) ont subi un traitement préalable d'oxydation électrochimique.

9. Procédé conforme à l'une ou plusieurs des revendications 6 à 8, **caractérisé en ce que**, dans l'étape (b), on fait passer les fibres de renfort issues de l'étape (a) dans un bain contenant du poly(sulfure de phénylène) en suspension, puis on les fait sécher et on les enroule.

10. Procédé conforme à la revendication 9, **caractérisé en ce que** le bain contient en outre une matière thermoplastique en solution.

11. Procédé conforme à l'une ou plusieurs des revendications 6 à 10, **caractérisé en ce qu'**on traite dans l'étape (c), pour en faire un matériau composite, des fibres de renfort enduites qui se présentent sous forme de filés de filaments, de fibres courtes, de tissus, d'articles tressés, de tricots, de tissus maille, de tissus non-tissés ou de mats unidirectionnels ou multi-directionnels.

12. Emploi d'un matériau composite conforme à l'une ou plusieurs des revendications 1 à 5 ou d'un matériau composite obtenu par un procédé conforme à l'une ou plusieurs des revendications 6 à 11, en vue de la fabrication de pièces pour la construction aéronautique, la construction automobile ou la construction de machines et d'appareils, ou en vue de la fabrication de composants médicaux.

13. Fibres de renfort, portant une couche d'enduit contenant un poly(sulfure de phénylène), **caractérisées en ce que** la proportion pondérale de poly(sulfure de phénylène), rapportée aux fibres de renfort sans enduit, vaut de 0,001 à moins de 0,01 %.

14. Fibres de renfort conformes à la revendication 13, **caractérisées en ce que** la proportion pondérale de poly(sulfure de phénylène), rapportée aux fibres de renfort sans enduit, vaut de 0,002 à 0,009 %.

15. Fibres de renfort conformes à la revendication 13 ou 14, **caractérisées en ce que** la couche d'enduit est constituée de poly(sulfure de phénylène) et d'une matière thermoplastique ou d'une matière thermodurcissable.

16. Fibres de renfort conformes à l'une ou plusieurs des revendications 13 à 15, **caractérisées en ce que** ces fibres de renfort sont des fibres de carbone issues de précurseurs en brai, polyacrylonitrile ou viscose, des fibres d'aramide, des fibres de verre, des fibres de céramique, des fibres de bore, des fibres synthétiques ou des fibres naturelles, ou encore une combinaison de telles fibres.
